# EUROPEAN PATENT APPLICATION

(11) **EP 1 387 084 A2**
(43) Date of publication of application: **04.02.2004**
(21) Application number: 03012875.5
(22) Date of filing: 06.06.2003
(51) Int. Cl.: F02P 1/08, F02P 1/04, F02P 5/15, F02P 3/04

(54) **Inductive ignition system with digital control**

(30) Priority: 02.08.2002 IT MI20021757
(71) Applicant: DUCATI ENERGIA S.p.A., 40132 Bologna (IT)
(72) Inventor: Regazzi, Gianni, 40050 Argelato Bologna (IT); Palmieri, Nicola, 40033 Casalecchio di Reno Bologna (IT); Bernacchi, Massimiliano, 56038 Ponsacco Pisa (IT)
(74) Representative: Coloberti, Luigi

(57) **Abstract**

An inductive ignition system for low powered internal combustion engines comprises a voltage generator (10) having a magnetic circuit (16) linked with an ignition coil (17,18) connected to a spark plug (CD). The voltage generator (10) periodically produces alternating voltage signals (VL) each comprising a first and a second half wave (S1,S2) of a first polarity, and an intermediate half wave (S3) of opposite polarity. The voltage signals are used in a differentiated way to supply a microprocessor (Q1) of an ignition control circuit (21), with event signals correlated to the polarities of the voltage half waves (S1,S2,S3), and to the rotational speed and direction of rotation of the engine. The microprocessor (Q1) is programmed to control the flowing of the current (IL1) through the primary winding (17) of the ignition coil (17,18) during the second voltage half wave (S2) of each voltage signal (UL), at the starting, and during the intermediate half wave (S3) during the running of the engine, to generate ignition sparks at differentiated advance angles.

## Description

### BACKGROUND OF THE INVENTION

This invention refers to an inductive ignition system with digital control for low powered internal combustion engines, for example for chain saws, lawnmowers, small motor vehicles and similar appliances; more in particular, the invention relates to a variable spark-advance ignition system of inductive type, capable of controlling the generation of the spark and the charging of the feeding circuit, in a differentiated mode, in relation to the variable speed rate of the engine, so as to obtain highly efficient ignition conditions, at the starting and during the running.

### STATE OF THE ART

As known, the characteristics in terms of duration of the spark in an inductive ignition, and the characteristics in terms of efficiency are lighter than those of a capacitive ignition; this is especially evident at the starting up or at the low running or low rotational speed of the engine when the energy made available by the magnetic circuit of the voltage generator is still relatively limited.

For these reasons, wherever possible, it is generally preferred to make use of ignitions of inductive type, as compared to those of the capacitive type.

Conversely, it is well known that the limitation of an inductive ignition lies in that the spark can only be generated when a sufficiently high current is flowing in the primary winding of the ignition coil.

Examples of inductive type ignitions are described in US-A-4.188.929, US-A-4.515.118 and EP-A-0 727 578.

In the first two cases, use is made of only the positive half wave of the alternating voltage signals periodically produced by the voltage generator, to flow in the primary winding of the ignition coil a current of a sufficient value to cause, following its sudden interruption, a voltage peak of a sufficiently high value to generate an ignition spark.

In particular US-A-4.515.118 suggests the use of a microprocessor for controlling and calculating the ignition time during the positive half wave of the voltage generator, in relation to the rotational speed of the engine.

According to this document, the negative half wave of the voltage is used for charging the input capacitor of the microprocessor, while the positive half wave is used for generating the ignition spark, both at start-up and during the normal running of the engine; this solution involves limits in the choice of the angle of spark advance.

Bearing in mind that modern engines with variable spark advance tend to work with extremely low angles of advance, for example, in the region of 2-3° or less, while under normal operative conditions and at a high number of revolutions they tend to operate with higher angles of advance in relation to the requirements of use or application of the engine, the generation of the ignition current only during the positive half waves of the voltage generator, greatly limits the performances and the possibilities of use of an ignition of this type.

The angle of spark advance in such types of ignition cannot exceed approximately 8-10°; in addition, at the start-up when the engine is operative at low rotational speeds, the energy supplied by the voltage generator during the negative voltage half waves, may not guarantee a correct and appropriate feeding of the control microprocessor.

Bearing in mind that in order to reach maximum efficiency at high numbers of revolutions, modern engines with variable spark advance must work with high advance values, as mentioned for example in EP-A-0 727 578, it is necessary to find a new and different solution which allows the ignition to work on considerably higher spark advance value ranges compared to those allowed by the ignitions of conventional type, providing a good sparking energy under all steady state conditions.

Although EP-A-0 727 578 proposes a solution capable of remedying the previously known problems of inductive ignitions, that is, of increasing the angle of the spark advance by means of an electronically controlled ignition system, such solution is susceptible of further improvements.

In particular, according to EP-A-0 727 578 use is made of two angularly spaced apart phase sensors to determine the advance angle of the ignition at the start-up and during the normal operative conditions of the engine.

The use of sensors to determine the instant the spark is generated, in an inductive ignition system of the above mentioned type, although presenting the positive feature of having fixed mechanical references in determining the ignition times, not affected by the structural characteristics of the voltage generator or by other external causes, conversely presents several negative aspects, including greater circuital complexity, higher costs, and the impossibility of optimising the operative efficiency of the entire system with changes in the steady state or running conditions of the engine.

### OBJECTS OF THE INVENTION

The main object of the invention is therefore to optimise the performance and efficiency of a microprocessor-controlled electronic ignition system, particularly suitable for low powered internal combustion engines, which do not use specially dedicated reference sensors; in particular, during the start-up phase, the voltage generated by the ignition coil on the spark plug is maximised, by means of a solution which is independent of the structural and functional features of the voltage generator, of the type of rotor and magnets used, of the air gaps, and in general of the characteristics of the electromechanical system chosen, and of the variations in environmental temperature in which the entire system operates.

A still further object of this invention is to provide an inductive ignition system with a digital control, whereby it is possible to operate with differentiated spark advance values at start-up and during the normal running conditions of the engine, with the possibility of controlling the spark advance of the engine, via software, by means of a specifically programmable microprocessor according to the requirements of the specific engine and by the particular application.

With the ignition system according to this invention it is possible to position the time instant of generation of the spark, during the start-up phase of the engine, very close to the upper dead centre and within a few degrees, guaranteeing in all cases a sparking suitable for the ignition, and to be able to work, from the minimum to the maximum number of revolutions of the engine, with spark advances which can vary continuously, within a range of values of interest for these types of engines, for example ranging from 18° to 30°.

Considering the types of application of low powered engines for the uses previously referred to, it is possible to establish the important characteristics required for this type of electronic ignition; in particular:
1) the engine must be able to run smoothly and have a good torque at high revolutions, for example in the region of 9,000-10,000 revolutions per minute; this means being able to make use of an electronic ignition system which is flexible in the spark advance curve, which guarantees a spark with long-lasting characteristics, especially at high speed rates;
2) the engine, which in the great majority of cases is manually started, must be able to start up easily under all climatic conditions, which implies the existence of excellent spark characteristics even at very low engine speeds, for example in the region of 700 revolutions per minute, and under all conditions.

### BRIEF DESCRIPTION OF THE INVENTION

The aforementioned objects can be achieved by means of an inductive ignition system, with a digital control according to claim 1.

In order to achieve the objects of this invention, it was decided to use a voltage generator constructed to generate alternate voltage signals comprising a first and a second end half-waves having a first polarity, and third intermediate half-wave having a second polarity opposite to the first one; according to a preferential embodiment of the invention it was also decided to work both on the positive intermediate half wave, and on the subsequent negative end half wave of each alternate voltage signal periodically supplied by the voltage generator, in order to optimise the spark advance conditions, with variations of the sparking time and condition considerably superior to those obtainable with conventional ignition systems.

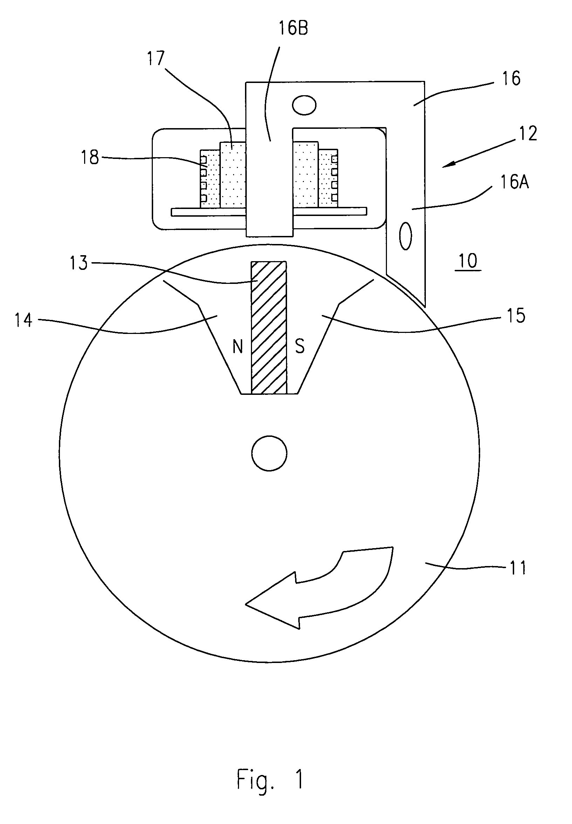

With reference to the mechanical and magnetic configuration of the voltage generator shown in figure 1 of the drawings, by means of which, at each revolution of the rotor it is possible to generate an alternate voltage signal comprising three half-waves, that is a central or intermediate half wave having a first polarity, and first and second end half waves both having a second polarity opposite to the first one, according to this invention it is possible to fulfil the requisites of flexibility of the spark advance curve required in the preceding point 1.

More precisely, during the start-up phase of the engine it is possible to achieve a fixed spark advance, by exploiting the maximum current flowing in the primary winding of the ignition coil during the second end half wave of each alternate voltage signal periodically supplied by the generator. Once the engine has started up, for example on reaching or exceeding 1,000 / 1,500 revolutions per minute, the instant of spark advance can be varied and controlled in a completely flexible and continuous mode throughout the entire range of degrees of extension of the central half wave, in which the current flowing in the primary winding of the ignition coil is high enough to guarantee the generation of the spark on the spark plug.

The control of the instant of the spark advance during the central half wave of each alternate voltage signal produced by the generator, is performed via software through an appropriate digital type microprocessor, according to the requirements of the specific engine.

The ignition system consequently makes it possible to position the moment of generation of the spark, during the engine start-up phase, very close to the upper dead centre, for example in an angle of or less than 2-3°, thereby facilitating the starting up; thereafter, the engine may operate from the minimum engine speed, up to the maximum speed, with spark advances which can vary continuously within an interesting range of values for this type of engines.

To fulfil the requirements of point 2 set forth above, according to the invention it was also decided to make the ignition operate, during the start-up phase, wholly independently of the external conditions and as efficiently as possible: taking into consideration that during the start-up phase, due to the cyclic irregularity of the revolutions of the engine, it is advisable to operate on a fixed reference point by exploiting all the magnetic energy available in the generator, it was decided to operate on the second end half wave of opposite polarity, subsequent to the central half wave, generating the spark the moment the current in the primary winding reaches its maximum value.

A choice of this kind enables the electronic ignition to exploit all the energy made available by the magnetic circuit, independently of all the conditions outside the ignition, the electromechanical system and the working temperature of the engine, thereby generating on the secondary winding of the ignition coil the maximum voltage that the system itself is able to supply for the ignition of the engine at the start-up.

According to this invention therefore an inductive ignition system with digital control for low powered internal combustion engines has been provided the ignition system comprising:
- a magnetic voltage generator having a stator provided with a first magnetic circuit and an ignition coil having a primary winding and a secondary winding connected to a spark plus, and a rotor operatively connected to the engine, the rotor having a magnetic pole-system interacting with the magnetic circuit of the stator;
- a microprocessor controlled circuit for circulation of an ignition current, said microprocessor controlled circuit comprising the primary winding of the ignition coil; said voltage generator being such to periodically generate alternate voltage signals having half waves of opposite polarities on the primary winding of the ignition coil;
- first and second electronic switches in the microprocessor controlled circuit for controlling circulation of the ignition current flowing in primary winding of the ignition coil; and
- a control circuit comprising a digital microprocessor having signal inputs and outputs;
characterised in that:
- the magnetic circuit and the ignition coil of the stator, and the pole-system of the rotor of the voltage generator are magnetically constructed and arranged to generate alternate voltage signals comprising a first and a second end half waves having a first polarity, and a third central half wave having a second polarity opposite to the first one;
- an ignition current measuring device between the said first and second electronic switches, respectively connected to a first input of the microprocessor by a biasing resistor means, to supply said first input of the microprocessor with a voltage signal having a value correlated to the value of the ignition current flowing in the ignition coil;
- first and second signal generating means for providing event signal correlated to the voltage generated in the primary winding of the ignition coil, said first and second event signal generating means being connected to a respective side of the primary winding of the ignition coil, and respectively to a second and a third input of the microprocessor;
- the microprocessor comprising a first output connected to the control electrodes of said electronic switches;
- the microprocessor also comprising programmable data storage and calculation means for time controlling said first and second elctronic switches, to enable the circulation of an ignition current, upon start-up of the engine, during the second end half wave of each voltage signal interrupting, upon reaching the maximum value sensed by the microprocessor, the current flowing in said controlled circuit; respectively for enabling the circulation of an ignition current, after start-up of the engine, during the central half wave of each voltage signal interrupting the same ignition current at a spark advance value stored in the microprocessor and depending on the revolution number of the engine.

According to a further feature of the invention, the microprocessor is programmed to enable the charging of a capacitor of a feeding circuit for the microprocessor, during each alternated voltage signal of the generator, preventing the charging at the generation of a spark.

According to a further feature of the invention, the microprocessor is also programmed to recognize the speed and directional rotation of the engine, and to disable the generation of the spark in order to limit the maximum number of engine revolutions, or to prevent a possible reverse rotation of the engine, in relation to event signals fed to the microprocessor by the control circuit.

### BRIEF DESCRIPTION OF THE DRAWINGS

These and further features of the digital control inductive ignition system according to this invention, will be more clearly evident from the following description with reference to the example of the accompanying drawings, in which:
Fig. 1 shows a voltage generator suitable for an inductive ignition system according to the invention;
Fig. 2 shows the wiring diagram of the inductive ignition system according to the invention;
Fig. 3 shows the graph of the voltage signals in a no-load condition of the primary winding of the ignition coil, during the forward rotation of the engine;
Fig. 4 shows the graph of a voltage signal on the primary winding of the ignition coil, during the start-up of the engine;
Fig. 5 shows the graph of the current flowing in the primary winding of the ignition coil referred to the voltage signal of figure 4;
Fig. 6 shows the graph of a voltage signal on the primary winding of the ignition coil during the running of the engine;
Fig. 7 shows the graph of the current flowing in the primary winding of the ignition coil, referred to the voltage of figure 6;
Fig. 8 shows the graph of a voltage signal in a no-load condition of the primary winding of the ignition coil, during a reverse rotation of the engine.

### DETAILED DESCRIPTION OF THE INVENTION

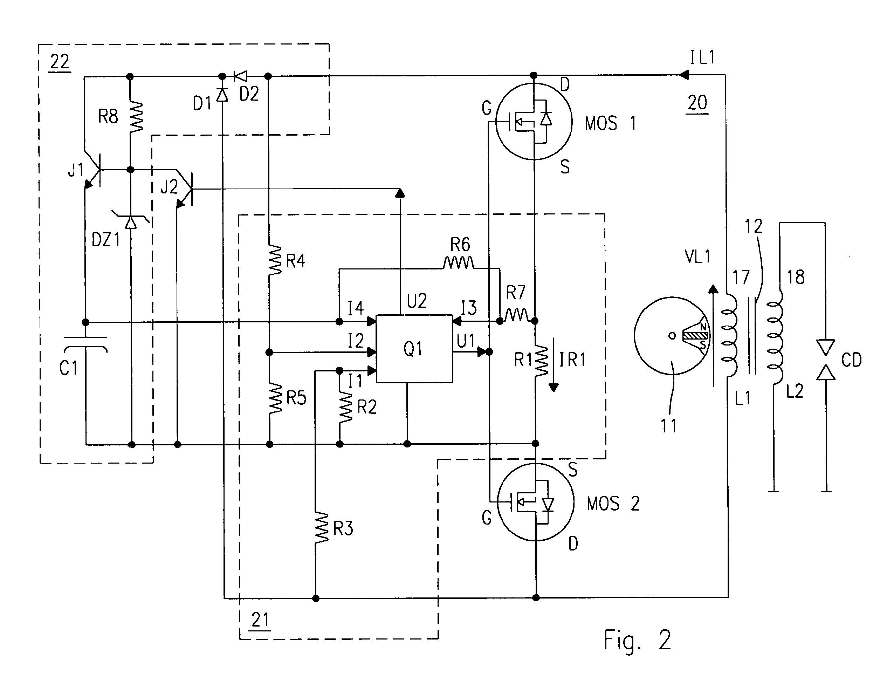

The inductive ignition system according to the invention will be now described with reference to figures 1 and 2 of the drawings.

In figure 1 the reference number 10 indicates a voltage generator comprising a magnetic rotor 11 having a magnetic pole system N, S, operatively connected to an internal combustion engine, and a stator 12 provided with a magnetic circuit linked to the pole-system of the rotor 11 and to an ignition coil 17, 18.

The voltage generator 10 must be able to periodically generate, at each revolution of the rotor 11, an alternated voltage signal VL comprising two end half waves S1, S2, having a same polarity, and a central or intermediate half wave S3 having a polarity opposite to the first one.

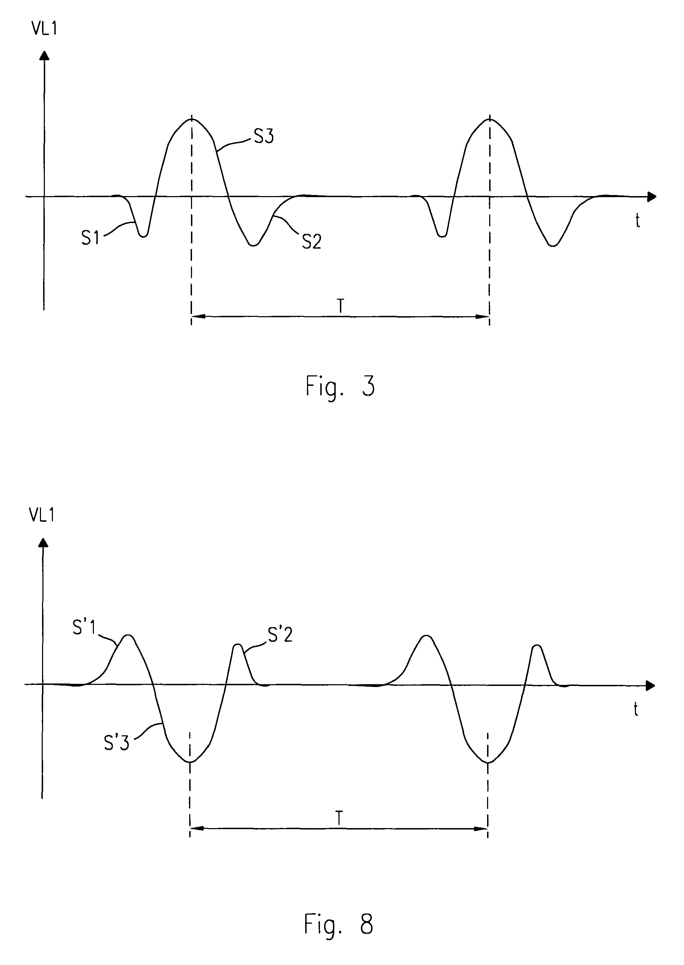

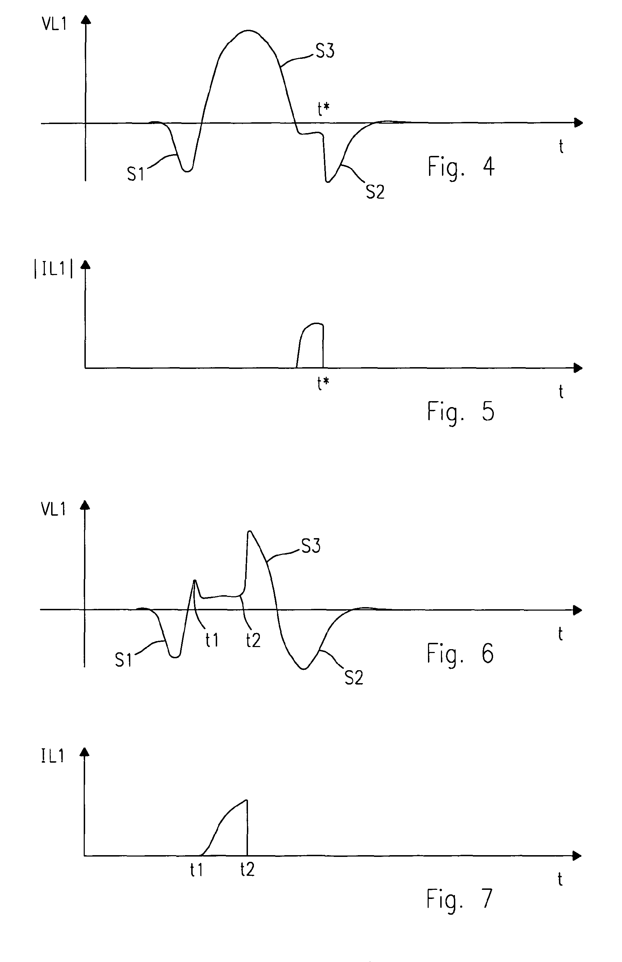

More precisely, referring to the example of figure 3, according to the magnetic configuration of the voltage generator shown in figure 1, the magnet voltage generator 10 must be capable to sequentially generate alternate voltage signals each comprising, for example, a first negative end half wave S1 followed by a positive central half wave S3, of greater amplitude, and a subsequent second negative end half wave S2, as shown in the graph in figure 3 which represents the voltage signals VL1 produced by the generator 10 on the primary winding 17 of the ignition coil, in relation to time t, and in which T represents the period between two adjacent voltage signals, equivalent to the time required by the rotor to perform a revolution of 360°.

Therefore, again according to the example in figure 1, the rotor 11 comprises a magnetic pole system N, S, provided by a permanent magnet 13 which extends radially; the magnet 13 is magnetized in a cross direction and has opposite magnetic polarities S and N between two pole pieces 14 and 15 extending peripherally on the edge of the rotor over an angle ranging for example from 30° to 40°.

The stator 12 in turn comprises an upturned U-shaped magnetic yoke 16 provided by a pack of magnetic laminations having legs 16A and 16B extending towards the peripheral edge of the rotor 11 and defining a magnetic circuit linked to and interacting with the magnetic circuit of the rotor 11 provided by the pole pieces 14 and 15.

An ignition coil 17, 18 is disposed around the leg 16B of the magnetic yoke 16 of the stator 12; the ignition coil comprises a primary winding 17 inductively coupled to a secondary winding 18 which powers an ignition spark plug CD, as shown in the wiring diagram of figure 2.

The circulation of the current IL1 in the primary winding 17 of the ignition coil, as well as the instant of spark advance for generating the spark, are electronically controlled by means of a digital microprocessor Q1 forming part of a control circuit shown by the wiring diagram of figure 2, where references L1 and L2 have been used to indicate the inductances of the primary winding 17 and of the secondary winding 18 of the ignition coil, and reference CD the ignition spark plug; and in which reference VL1 and IL1 have been used to indicate the voltage signals produced by the generator 10, and respectively the current flowing in the primary winding 17 of the ignition coil.

With reference to the diagram in figure 2, the inductive ignition system therefore comprises the voltage generator 10 and an ignition coil whose primary winding 17 is disposed in a microprocessor controlled circuit 20 for circulation of the ignition current. The electric circuit 20, in addition to the primary winding 17, comprises two electronic switches each having an internal or external diode for reverse circulation of the current; the electronic switches comprise for example two switches MOS1 and MOS2, whose Source - Drain circuits S-D are oppositely connected to each other by means of the source electrode S, and to a current measuring device such as the resistor R1 for the ignition current IR1; the resistor R1 makes it possible to control the ignition current IR1 flowing in the primary winding 17 and to determine the time instant at which to generate a spark in the ignition spark plug CD, during the start-up phase, and normal running of the engine.

The diagram in figure 2 also comprises a second control circuit 21 for controlling the circulation of the ignition current IR1 in the circuit 20.

More precisely, the control circuit 21 comprises a digital microprocessor Q1 having a first output U1 connected to the control electrodes G of the two electronic switches MOS1 and MOS2.

The microprocessor Q1 is provided with a first input I1 and a second input I2 for event signals correlated to the phase and to the polarities of the voltage signals VL1 provided by the voltage generator 10 on the primary winding 17 of the ignition coil.

More precisely, a first input I1 of the microprocessor Q1 is connected to an end of the primary winding 17 by a first event signal generating means, schematically represented by a voltage divider R2 and R3, while a second input 12 of the microprocessor Q1 is connected to the other end of the primary winding 17 by means of a second event signal generating means correlated to the voltage VL1, comprising a voltage divider R4 and R5.

A third signal input I3 of the microprocessor Q1 is connected to the resistors R6 and R7, necessary for biasing of the input I3; R7 is in turn connected to the measuring resistance R1 and possesses a value higher than that of the same measuring resistance R1. The microprocessor Q1 is also provided with a fourth input I4 connected to a feeding circuit 22.

The feeding circuit 22 comprises a capacitor C1 connected, by means of a transistor J1 and a diode D1, to one side of the primary winding 17 of the ignition coil, and connected by means of the same transistor J1 and a diode D2 polarised in the opposite direction to the diode D1, to the other side of the primary winding 17.

A resistor R8 and a Zener diode DZ1 stabilise the voltage of the capacitor C1 at a pre-established value.

The base of the first transistor J1 is connected to the collector-emitter circuit of a second transistor J2, whose base is in turn connected to a second output U2 of the microprocessor Q1.

The rotation of the rotor 11 in the direction of the arrow shown in figure 1, with reference to the magnetic polarities N and S shown in the aforesaid figure 1, sequentially generates on the primary winding 17 of the ignition coil alternate voltage signals VL1 shown in the graph in figure 3; this voltage signals are used for various purposes and namely:
A) to generate the ignition current IR1 in the circuit 20 when the microprocessor Q1 enables the current conduction, closing the two electronic switches MOS1 and MOS2;
B) to generate the event signals fed to the inputs I1 and I2 of the microprocessor Q1, which constitute a phase reference signals that the microprocessor Q1 will use in order to determine the direction and speed of rotation of the engine, and to implement the changes in spark advance, in relation to data programmed in the microprocessor Q1. In particular, through the event signal generating device, provided by the voltage divider R2-R3, the input I1 of the microprocessor Q1 receives a signal which indicates that the voltage VL1 is negative, or more in general has a first polarity, while through the second event signal generating device, provided by the voltage divider R4 and R5, the other input I2 of the microprocessor Q1 receives a second signal which indicates to the same microprocessor that the voltage VL1 is positive or has a polarity opposite to the previous one;
C) lastly, the voltage VL1 is used for charging the capacitor C1 which feeds the control circuit 21; the capacitor C1, as described previously, depending upon the operative conditions of the engine, is charged either during the central half wave S3, or during the end half waves S1 S2 of polarity opposite to the central half wave S3, by means of the two diodes D1 and D2 and the transistor J1, under the control of the microprocessor Q1 by means of the transistor J2.

Still with reference to the diagram in figure 2 and the remaining figures, a description is given hereunder of the operative sequence of the inductive ignition system according to this invention.

From zero revolutions per minute, that is, with the engine at a standstill, up to a certain number of revolutions per minute (RPM) which takes the name of "cut-in speed", somewhere in the region of 700 RPM, the system keeps the two electronic switches MOS1 and MOS2 open, without causing circulation of a current in the circuit 20 and without producing any induced voltage on the secondary winding 18 of the ignition coil.

Starting from the "cut-in speed", up to a number of revolutions per minute that can be set via software in the microprocessor Q1, called "start-up speed", indicatively just a little below idling, the system is powered on the central half wave S3 of VL1, positive in the case in question, always keeping the switches MOS1 and MOS2 open.

As soon as the microprocessor Q1 recognises the second half wave S2 of VL1, it enables the conduction of the switches MOS1 and MOS2 so as to allow the flowing of a current IR1 which, from the primary winding 17 enters the MOS2, passes through the resistor R1 and returns onto the winding 17 through the MOS1.

When the current IR1 flowing through the measuring resistor R1, detected in the form of voltage at the input I3 of the microprocessor Q1, reaches its absolute maximum value during the half wave S2, as shown in the graph of figure 5, the switches MOS1 and MOS2 are abruptly opened in such a way as to produce a voltage peak on the primary winding 17 of the ignition coil, which will give rise to a high induced voltage in the secondary winding 18, causing a spark on the spark plug CD.

As mentioned previously, the current IR1 is measured depending on the voltage which is generated on the resistor R1, of a few tens of m.Ohm, which reflects on the input I3 through the two biasing resistors R6 and R7 of a few tens of K.Ohm.

The microprocessor Q1, fitted with an internal analogical/digital converter, is therefore programmed with an appropriate algorithm to detect the instant in which the current IR1, in absolute value, reaches its maximum, and to emit at its output U1 a signal for the control electrodes G of the two switches MOS1 and MOS2, which will deactivate the latter, to open and consequently cause the generation of the spark with a practically fixed spark advance value, very close to the upper dead centre of the engine, depending exclusively upon the magnetic characteristics of the voltage generator, and devoid of any external influences.

In the closed condition of the two electronic switches MOS1 and MOS2, all the current IL1 flowing through the primary winding 17 of the ignition coil, corresponds to the current IR1 which flows through the measuring resistor R1; consequently, during this phase, no current circulates towards the feeding circuit 22 whose capacitor C1 will therefore feed the microprocessor Q1. Conversely, when the two electronic switches MOS1 and MOS2 are open, the voltage VL1 produced on the primary winding 17, will cause the circulation of a current IL1 towards the feeding circuit 22 for charging the capacitor C1 during the positive half wave.

After having exceeded the cut-in speed of the engine, the system, in the example shown will use the two negative half waves S1 and S2 to power itself, and to maintain the capacitor C1 charged. As soon as the microprocessor Q1 by means of the event signals supplied at its inputs I1 and 12, detects the presence of the positive half wave S3 of VL1, figure 6, at an instant t1 it enables the conduction of the two electronic switches MOS1 and MOS2, re-opening them at an instant t2 to generate a spark on the spark plug CD in accordance with an ignition spark advance curve programmed via software in a memory of the microprocessor Q1, depending on the number of revolutions of the engine. The event signal of the positive half wave S3 of VL1 is taken as a phase reference for the spark advance curve.

By suitably choosing the spark advance curve, in relation to the requirements of use of the engine, it is possible to control the instant of generation of the spark with a spark advance considerably greater than that of the start-up phase of the engine.

After starting up the engine, the system will consequently power itself during the two half waves S1, S2, which have a polarity opposite to that of the central half wave S3.

It should be noted that, both during the start-up phase, and during the normal running, the microprocessor, a few instants before interrupting the ignition current IR1, will disenable the charging of the feeding capacitor C1 by means of the transistor J2; this procedure is necessary in order to prevent part of the interrupted current IR1 from going on to charge C1: if this should occur, the instantaneous variation in current IR1 would be disadvantaged and the voltage induced on the spark plug CD would consequently be less.

In the applications for which it is required, the inductive ignition system according to the invention can also establish a limitation of the maximum number of revolutions for the engine, by opening the two electronic switches MOS1 and MOS2 only when the current IR1 which flows through the measuring resistor R1 is null, so as not to have induced voltages on the secondary winding 18 of the ignition coil.

In fact, the event signals supplied to the two inputs I1 and I2 of the microprocessor Q1, are sensed by the latter as engine timing signals, which is an information sufficient to know at what number of revolutions the engine is rotating. Therefore when the microprocessor Q1 senses that the engine has reached a pre-established number of revolutions, stored in the microprocessor itself, the latter will actuate the opening of the two electronic switches MOS1 and MOS2 when the current flowing in the winding 17 of the ignition coil, is null, thereby avoiding the generation of a spark on the spark plug CD.

For certain applications in which there is a possibility that the ignition spark can be generated when the engine is rotating in a reverse direction, compared to the forward direction of movement, the inductive ignition system according to the invention can recognise the direction of rotation of the rotor and inhibit the generation of the spark by means of the same event signals supplied to the inputs I1 and 12 of the microprocessor Q1; in fact, as shown in figure 8, during the reverse rotation of the engine the polarities of the half waves S1 S2 and S3 of each voltage signal VL1, will be reversed, compared to the case of figure 3; in other words, with reference to the specific example, the microprocessor Q1, during the forward rotation of the engine, will detect a positive half wave S3 alternated by two negative half waves S1 and S2, while during the reverse rotation of the engine it will detect a negative half wave S'3 alternated by two positive half waves S'1 and S'2.

With regard to the feeding circuit 22, as was specified previously, the capacitor C1, according to the circumstances, is kept charged by the central half wave S3, or by the half waves S1, S2 of opposite polarity of the primary winding 17 of the ignition coil.

This is necessary especially in order to have a satisfactory power supply during the starting up of the engine. In this case, in fact, the microprocessor Q1 must pilot the two electronic switches MOS1 and MOS2 exclusively with the voltage made available by the capacitor C1, which must therefore be high enough to ensure the satisfactory polarisation of the two electronic switches. During start-up, the choice of working on the half wave which follows the central half wave, that is to say on the second negative half wave S2 of the voltage VL1 in the case of figure 3, for generating the ignition spark, proves to be a winner in terms of supplying power to the microprocessor Q1 in that the capacitor C1 is charged by the central half wave S3 a few instants before enabling the conduction of the two electronic switches MOS1 and MOS2.

Conversely, after the starting up of the engine, it will be the responsibility of the two half waves S1 and S2 of opposite polarity to that of the central half wave S3, to keep the capacitor C1 charged; in this case, the recharging frequency and the energy made available by the magnetic circuit of the generator will be high enough to ensure a voltage constantly above the minimum threshold necessary for the correct piloting of the two electronic switches MOS1 and MOS2.

From what has been described and shown in the accompanying drawings, it will be evident that an inductive ignition system, with digital control, has been provided whereby it is possible to achieve the objects of this invention by means of an extremely simple and inexpensive circuit, and whereby it is possible to vary and control the ignition spark advance characteristics, optimising the efficiency of the same system, both during start-up and during the normal running of the engine, all by means of a solution which is independent of the various types of the flywheel, magnets and other characteristics of the electromechanical system chosen, and of the external conditions of the system itself.

It is understood therefore that other modifications or variations may be made to the entire ignition system or to several of its parts, for example, by reversing the N and S polarities of the magnet 13 of the rotor, and consequently the polarities of the half waves S1, S2 ed S3, without thereby departing from the scope of the accompanying claims.

## Claims

1. An inductive ignition system with digital control for low powered internal combustion engines, comprising:
- a magnetic voltage generator (10) having a stator (12) provided with a first magnetic circuit (16) and an ignition coil having a primary winding (17) and a secondary winding (18) connected to a spark plug (CD), and a rotor (11) operatively connected to the engine, the rotor having a magnetic pole-system (N, S) interacting with the magnetic circuit of the stator (12);
- a microprocessor controlled circuit (20) for circulation of an ignition current (IL1), said microprocessor controlled circuit (20) comprising the primary winding (17) of the ignition coil; said voltage generator (10) being such to periodically generate alternate voltage signals (VL1) having half waves (S1, S2; S3) of opposite polarities on the primary winding (17) of the ignition coil;
- first and second electronic switches (MOS1, MOS2) in the microprocessor controlled circuit (20) for controlling circulation of the ignition current (IL1) flowing in primary winding (17) of the ignition coil; and
- a control circuit (21) comprising a digital microprocessor (Q1) having signal inputs and outputs;
**characterised in that**:
- the magnetic circuit (16) and the ignition coil (17, 18) of the stator (12), and the pole-system (N, S) of the rotor (11) of the voltage generator (10) are magnetically constructed and arranged to generate alternate voltage signals comprising a first and a second end half waves (S1, S2) having a first polarity, and a third central half wave (S3) having a second polarity opposite to the first one;
- an ignition current measuring device (R1) connected between the said first and second electronic switches (MOS1, MOS2), respectively connected to a first input (I3) of the microprocessor (Q1) by a biasing resistor (R7), to supply said first input (I3) of the microprocessor (Q1) with a voltage signal having a value correlated to the value of the ignition current (IL1), flowing in the ignition coil (17);
- first and second signal generating means (R2, R3; R4, R5) for providing event signals correlated to the voltage generated in the primary winding (17) of the ignition coil, said first and second event signal generating means (R2, R3; R4, R5) being connected to a respective side of the primary winding (17) of the ignition coil, and respectively to a second and third inputs (I1, I2) of the microprocessor (Q1);
- the microprocessor (Q1) comprising a first output (U1) connected to the control electrodes (G) of said electronic switches (MOS1, MOS2);
- the microprocessor (Q1) also comprising programmable data storage and calculation means for time controlling said first and second elctronic switches (MOS1, MOS2), to enable the circulation of an ignition current (IL1), upon start-up of the engine, during the second end half wave (S2) of each voltage signal (VL1) interrupting, upon reaching the maximum value sensed by the microprocessor, the current flowing in said controlled circuit (20); respectively for enabling the circulation of an ignition current (IL1), after start-up of the engine, during the central half wave (S3) of each voltage signal (VL1) interrupting the same ignition current at a spark advance value stored in the microprocessor (Q1) and depending on the revolution number of the engine.

2. Inductive ignition system according to claim 1, **characterised by** comprising a feeding circuit (22) for the microprocessor (Q1), said feeding circuit (22) comprising a power storing capacitor (C1), and microprocessor controlled switch means (J1, J2) to selectively connect said capacitor (C1) to the voltage generator (10), the microprocessor (Q1) being programmed to actuate said switch means (J1, J2) inibiting the circulation of the ignition current (IL1) provided by the voltage generator (10) towards said feeding circuit (22) preventing the charging of the power storing capacitor (C1) during the generation of a spark.

3. Inductive ignition system according to claim 2, **characterised in that** the capacitor (C1) of the microprocessor feeding circuit (22) is connected by a first transistor (J1), and by a first and a second diodes (D1, D2) to both sides of the primary winding (17) of the ignition coil, and **in that** a control electrode of the first transistor (J1) is connected to the collector-emitter circuit of a second transistor (J2) having a control electrode connected to a control outlet (U2) of the digital microprocessor (Q1).

4. Inductive ignition system according to claim 1 claim 3, **characterised in that** the microprocessor (Q1) is programmed to enable the charging of the power storing capacitor (C1) by the central half wave (S3) of each voltage signal (VL1), when the generation of the ignition spark occurs on the end half wave (S2) of opposite polarity subsequent to the central half wave (S3), at the start-up of the engine.

5. Inductive ignition system according to claim 3, **characterised in that** the microprocessor (Q1) is programmed to enable the charging of the power storing capacitor (C1), during the two end half waves (S1 S2) of polarity opposite to the central half wave (S3) of each voltage signal (VL1), when the generation of the spark occurs on the central half wave (S3), during the normal running of the engine.

6. Inductive ignition system according to claim 1, **characterised in that** said microprocessor (Q3) is programmed to detect the number of revolutions per minute of the engine, in relation to the event signals fed to the inputs (I1, I2) of the microprocessor (Q1) by the event signal generating means (R2, R3; R4, R5); the latter being also programmed to open said first and second electronic switches (MOS1, MOS2), upon reaching a maximum number of revolutions of the engine, and when the ignition current (IL1) has a null value.

7. Inductive ignition system according to claim 1, further **characterised in that** said data storage and calculating means of the microprocessor (Q1), are programmed to recognise the reverse rotational direction of the engine, in relation to event signals fed to the microprocessor (Q1) by the event signal generating means (R2, R3; R4, R5), inhibiting the generation of a spark.
